Europäisches Patentamt

European Patent Office

Office européen des brevets

(11) Veröffentlichungsnummer: **0 205 800 B1**

# EUROPÄISCHE PATENTSCHRIFT

(45) Veröffentlichungstag der Patentschrift: **21.08.91**

(51) Int. Cl.⁵: **F16C 33/58**

(21) Anmeldenummer: **86105311.4**

(22) Anmeldetag: **17.04.86**

(54) **Halterung von Laufringen.**

(30) Priorität: **22.06.85 DE 3522461**

(43) Veröffentlichungstag der Anmeldung:
**30.12.86 Patentblatt 86/52**

(45) Bekanntmachung des Hinweises auf die
Patenterteilung:
**21.08.91 Patentblatt 91/34**

(84) Benannte Vertragsstaaten:
**AT CH FR GB IT LI NL SE**

(56) Entgegenhaltungen:
**DE-A- 2 422 488**
**DE-C- 284 097**
**DE-C- 763 225**
**DE-U- 7 935 208**

(73) Patentinhaber: **M.A.N.-ROLAND Druckmaschinen Aktiengesellschaft
Christian-Pless-Strasse 6-30
W-6050 Offenbach/Main(DE)**

(72) Erfinder: **Reiser, Kurt
Wilhelm-Leuschner-Strasse 10
W-6050 Offenbach/Main(DE)**
Erfinder: **Jacob, Werner
Briandring 29
W-6000 Frankfurt 70(DE)**

(74) Vertreter: **Marek, Joachim, Dipl.-Ing.
c/o M.A.N.-ROLAND Druckmaschinen A.G.
Patentabteilung Postfach 529 u. 541
Christian-Pless-Strasse 6-30
W-6050 Offenbach/Main(DE)**

Rank Xerox (UK) Business Services

## Beschreibung

Die Erfindung betrifft ein Verfahren zur Befestigung von Laufringen für wälzlager nach dem Oberbegriff des Patentanspruchs 1, und die Verwendung einer nach diesem verfahren geschaffenen Lagereinrichtung.

Die Lagerung von rotierenden Maschinenteilen ist teilweise in beengten Verhältnissen vorzunehmen. Daher wird versucht, den Bauraum soweit als möglich zu begrenzen. Das führt dazu, daß die Möglichkeit zur Montage, bzw. Demontage, stark eingeschränkt werden. Aus diesem Grund ist man dazu übergegangen, die Lagereinheit in irgendeiner Weise aufzuteilen, um auf diese Weise die einzelnen Elemente nacheinander einbauen zu können.

Lösungen zu diesem Problem sind in verschiedenster Weise bekannt. So ist zum Beispiel eine übliche Bauweise, Wälzlager in axialer Richtung aufzutrennen, so daß eine obere und eine untere Lagerhälfte entsteht. Die Verbindung dieser beiden Lagerhälften muß dann mit relativ aufwendigen Spannmitteln vorgenommen werden. So wird etwa vorgeschlagen, einen Innenring eines Wälzlagers, der nach der vorgeschriebenen Weise geteilt ist, mit Hilfe von Spannringen auf beiden Seiten der Lagerfläche auf eine Welle aufzuspannen. Der ebenfalls geteilte Außenring wird mit Hilfe eines Lagergehäuses zusammengehalten. Sehr wichtig bei dieser Bauart ist, daß die Trennfuge des Lagers nicht in der Belastungszone liegt. Außerdem muß die Trennfuge sehr genau bearbeitet werden.

Eine weitere Verbesserung der Anbaumöglichkeiten von Wälzlagern läßt sich dadurch erzielen, daß entweder die Laufflächen der Wälzkörper direkt in einen der zu lagernden Teile angebracht wird oder daß die Laufbahn der Wälzlagerung in eines der beiden zu lagernden Teile eingebaut wird.

Als nachteilig an der Möglichkeit, die Laufbahn direkt an einem der zu lagernden Teile einzubringen, stellt sich heraus, daß das gesamte zu lagernde Teil dann aus dem relativ hochwertigen Werkstoff eines Wälzlagerringes gebaut sein muß, um nicht vorzeitig zu verschleißen. Das Einsetzen von hochwertigen Laufbahnen in einen minderwertigeren Grundwerkstoff bringt dem gegenüber Vorteile. Eine Lösung dieser Art wird in der DE-A-24 22 488 beschrieben. Dort wird ein Doppelkontaktelager für Kugeln oder übereinander liegenden Rollen beschrieben, das aus Laufbahnen besteht, die in Halter eingesetzt sind. Die Halter sind aus einem anderen Material als die Laufbahnen. Die Laufbahn kann aus einem einzigen Profilstab hergestellt werden. Die Laufbahn ist unterschiedlich warm behandelbar unabhängig von der Halterung. Sie wird an den aneinanderstoßenden Enden durch einen Schrägschnitt gekoppelt. Der Schrägschnitt erlaubt das Aufweiten bzw. Zusammenziehen des so entstehenden Lagerrings zur Montage in den Halter. Die vorgeschlagene Lösung weist aber verschiedene Probleme auf. Zum einen muß sichergestellt werden, daß die im Halter vorgesehene Nut für den Lagerring exakt der Breite des Lagerringes angepaßt ist. Ansonsten kann es zu Axialverschiebungen des Lagers kommen, die dessen Toleranzen überschreiten und auf die Dauer zu einem Lagerschaden führen müssen. Außerdem wird die Lagerung dieser Art nicht gegen Verschiebungen in Umfangsrichtung in ihrem Sitz gesichert. Das bedeutet aber, daß in dem Lager vorhandene Toleranzen sich laufend verschieben können und auch damit ein Ausfall des Lagers nach relativ kurzer Zeit zu erwarten ist. Ein weiteres Problem stellt sich in der Verbindung der beiden Enden des Lagerprofiles dar. Nach der in der Offenlegungsschrift dargestellten Weise besteht dort ein relativ großer Spalt, der durch die Elastizität des Lagermaterials auch kaum zu vermeiden ist. Damit ist aber eine weitere Stelle geschaffen, von der eine Schädigung des Lagers ausgehen muß. Mit der so beschriebenen Lagerung läßt sich auch kein Bauraum einsparen, da der Einbau ja konventionell erfolgt und das Lager selbst sogar mehr Platz beansprucht als ein konventionelles Lager. Sie ist allenfalls für großvolumige Lager geeignet, bei denen wertvoller, hochwertiger Werkstoff eingespart werden soll.

Weiterhin ist in der DE-C-763 225 ein Rollenlager, geschaffen gemäß einem Verfahren nach dem Oberbegriff des Anspruchs 1, beschrieben, bei dem die Laufflächen aus Klaviersaiten gebildet sind. Diese werden in konzentrisch oder schraubenlinienförmig an der Welle bzw. in der Bohrung angebrachten Nuten durch Zurechtbiegen eines Drahtstücks entsprechender Länge eingesetzt. Durch Verformung des Materials zwischen den einzelnen Drähten mit Hilfe eines Körners oder Walzenrades wird der Draht in der Nut festgelegt. Da so keine einheitliche Oberfläche entsteht, muß die ganze Anordnung um ein erhebliches Maß abgeschliffen werden, wodurch wiederum ungleichmäßige verteilte Härte-strukturen in der Lauffläche entstehen. Die verbleibenden Stoßstellen an den Drahtenden als Defekte in der Lauffläche sollen durch Versetzen am Umfang der Lagerstelle abgefangen werden.

Die Erfindung hat daher zur Aufgabe für ein Wälzlager eine einteilige, durchgehende Lauffläche zu schaffen, die ohne bleibende Verformung des Lagerelements und ohne bleibende Laufflächendefekte bei minimiertem radialem Druck auf das Maschinenelement während des Anformens in einer Laufringnut festgelegt werden kann.

Eine Lösung dieser Aufgabe ergibt sich nach dem Kennzeichen des Anspruchs 1. Das beschriebene Verfahren bietet verschiedene Vorteile. Die Verwendung von gesprengten Laufringen stellt sicher, das die Verbindung der beiden Ringhälften bzw. die Stoßfuge des Laufrings vollkommen kantenfrei sind. Die Laufruhe eines solchen Lagers unterscheidet sich nicht von einem normalen nicht gesprengten Lager. Durch die Verformung der beiden Stege beiderseits der Laufringnut gegen die Stirnseiten des Laufrings wird sichergestellt, das der Laufring in seiner Lage vollkommen festgehalten wird. Damit wird vermieden, daß durch elastische Verformungen innerhalb der Lagerung der Laufring wandern kann. Entscheidend an der beschriebenen Bauart zur Halterung von Laufringen ist aber, daß auf diese Weise ein Ring der Lagerung vollkommen in einen Lagerkörper integriert werden kann. Damit verringert sich der Bauraum des Lagers um annähernd 1/3. Der Werkstoff des Laufrings kann aus hochwertigem Lagerstahl gewählt werden, während der Werkstoff des Lagerkörpers ganz anders und anderen Erfordernissen angepaßt sein kann. Das für die Montage des Laufrings anzuwendende Verfahren ist sehr einfach und erfordert keine hohen Anforderungen an Genauigkeit oder spezielle Kenntnisse. Die Verwendung einer Halterung für einen Laufring zeigt sich besonders vorteilhaft in der Wälzlagerung einer exzentrisch gebohrten Hülse für das Gleitlager eines Gummizylinders in einer Offsetdruckmaschine. Die Hülse wird so dünnwandig wie möglich gestaltet und soll trotzdem aus einem billigen und gut zu bearbeitenden Werkstoff hergestellt werden. Der Aufwand für die Lagerung soll dabei minimal bleiben. Das läßt sich mit der genannten Halterung in sehr günstiger Weise lösen. Die Lagerfläche des Wälzlagers liegt nun fast auf der Höhe des Umfangs der Hülse und ist dort sicher durch die umgeformten Stege gehalten.

Die Anwendung und ein Ausführungsbeispiel sind im Folgenden anhand von Zeichnungen erläutert.

Es zeigen:

Figur 1    eine für den Einsatz eines Lagerrings vorbereitete Halterung,

Figur 2    einen Schnitt durch die fertig montierte Halterung mit eingesetzten Montagewerkzeugen und

Figur 3    einen Schnitt durch eine Lagerbüchse zur Lagerung eines Gummizylinders.

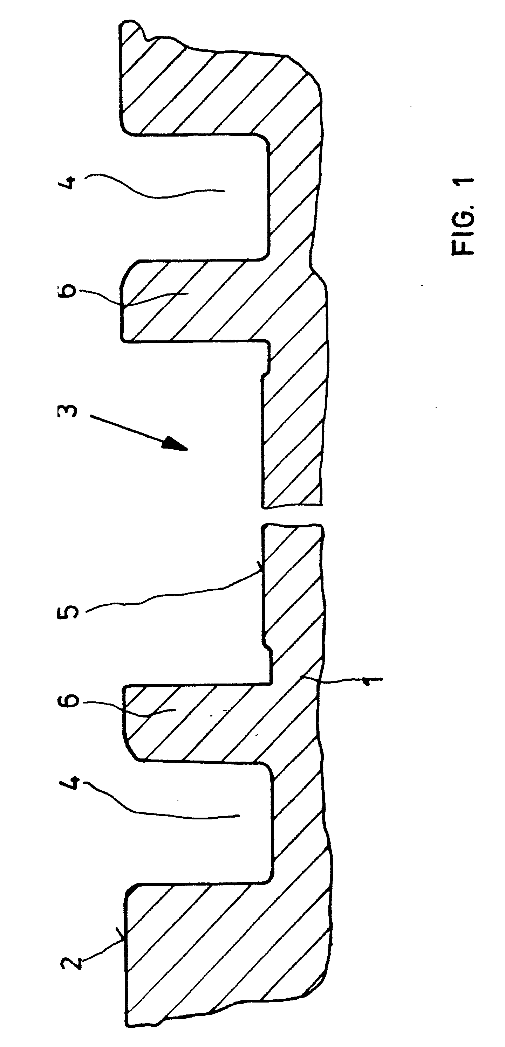

Zur Befestigung eines Laufringes eines Wälzlagers auf einem Wellenteil wird eine Halterung vorgeschlagen, wie sie im fertig bearbeiteten Zustand in Figur 1 dargestellt ist. Der Wellenzapfen 1 weist von seinem äußeren Umfang 2 abgesetzte Nuten auf. Eine Laufringnut 3 und zwei Spreiznuten 4 sind parallel zueinander angebracht. Der Nutgrund der Laufringnut 3 weist eine Lagerfläche 5 auf, die zu ihren seitlichen Begrenzungen hin leicht abgesetzt ist, um einen einwandfreien Sitz des einzusetzenden Laufringes zu gewährleisten. Jeweils zwischen der Laufringnut 3 und jeder der beiden Spreiznuten 4 verbleibt ein schmaler Steg 6.

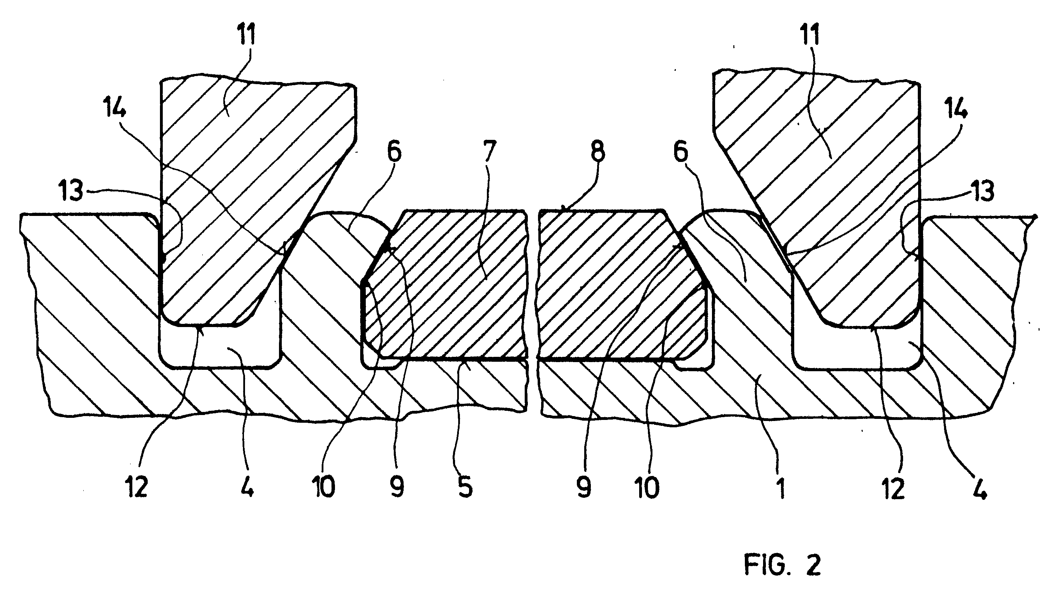

In Figur 2 ist nun gezeigt, wie ein Laufring in dieser Halterung montiert wird. Als Laufring ist hier der Innenring 7 eines Zylinderrollen- bzw. Nadellagers einzusetzen. Der Innenring 7 ist für die Montage in Richtung seiner Achse an einer Stelle gesprengt, d. h., er ist gezielt aufgebrochen worden. Die Bruchstelle ist nicht dargestellt. Der gehärtete Innenring 7 kann nun im Rahmen seiner Elastizität aufgeweitet und auch dann noch montiert werden, wenn auf einem Wellenteil, wie in Figur 1 gezeigt, einzelne Bereiche die Lagerstelle überragen, so daß diese an sich nicht mehr zugänglich ist. Der Innenring 7 muß demzufolge bis auf den Außendurchmesser des Wellenzapfens 1 im Bereich von dessen äußeren Umfang 2 aufgeweitet werden, damit er in die Laufringnut 3 eingesetzt werden kann. Er sitzt dort mit seiner Innenseite auf der Lagerfläche 5 auf und wird an seinen Stirnseiten von den Stegen 6 begrenzt. Da gerade an den Stirnseiten aus Montagegründen etwas Spiel notwendig ist, sitzt der Innenring 7 relativ lose, zumal er nur von seiner geringen Eigenelastizität an der Bruchstelle zusammengehalten wird. Er ist daher in diesem Zustand nicht als Laufring verwendbar.

Um ihn nun in der Laufringnut 3 festzulegen, wird er zwischen den Stegen 6 eingeklemmt. Dazu ist der Innenring 7 an seinen Stirnseiten mit zur Lauffläche 8 hin abfallende Anschrägungen 9 vorgesehen. Um die inneren Kanten 10 dieser Anschrägungen 9 herum werden die Stege 6 derart verformt, daß sie sich gegen die Anschrägungen 9 anlegen. Der Innenring 7 wird dadurch wie von einer Klammer auf der Lagerfläche 5 festgehalten. Es ist weder eine radiale noch eine axiale Bewegung gegenüber dem Wellenzapfen 1 möglich. Die Bruchstelle des gesprengten Innenringes 7 wird fügenlos geschlossen. Anstatt der Anschrägungen 9 könnten auch Profilierungen etwa in Form einer Nut an den Stirnseiten des Innenrings 7 vorgesehen sein. Dem Nachteil der etwas schwierigen Bearbeitung stünde dann der Vorteil der besseren Ausnutzung der Ringbreite für die Lauffläche 8 gegenüber. Die Funktion an sich bliebe jedoch gleich.

Zur Verformung der Stege 6 ist wie in Figur 2 angedeute ein konisch zulaufendes Montagewerkzeug zu verwenden. Die Ausführung kann etwa in Form einer Einrollscheibe 11 gewählt werden. Eine solche Einrollscheibe 11 muß am äußeren Umfang 12 schmaler sein als die Spreiznuten 4, damit sie überhaupt dort eingesetzt werden kann. Um beim Einrollen bzw. Verformen der Stege 6 definierte Verhältnisse zu bekommen, soll die Einrollscheibe 11 auf der einen Seite mit einer normal zur Scheibenachse stehende Stützfläche 13 und auf der anderen Seite mit einer in relativ spitzem Winkel von ca. 35° zu der Stützfläche 13 stehenden kegeligen Umformfläche 14 versehen sein. Für die Montage wird eine Einrollscheibe 11 in eine der Spreiznuten 4 eingesetzt und radial zum Wellenzapfen 11 bzw. parallel zur Stützfläche 13 belastet, bis sich die Stege 6 unter plastischer Verformung um die Kante 10 gegen die Anschrägung 9 anlegt. Dabei wird das Spiel in der Laufringnut 3 quer zum Innenring 7 beseitigt und der Innenring 7 wird gegen den zweiten Steg 6 angedrückt.

Durch Drehen des Wellenzapfens 1 bzw. Bewegen der Einrollscheibe 11 längs des Umfangs wird dann der Steg 6 vollständig gegen den Innenring 7 umgebördelt. Die Haltekraft axial zu der Einrollscheibe 11 wird dabei von der Stützfläche 13 abgefangen. Nach dem ersten Steg 6 wird auch der zweite Steg 6 umgebördelt. Wie in Figur 2 angedeutet, kann aber auch mit Hilfe zweier Einrollscheiben 11 gearbeitet werden, um Zeit zu sparen. Dabei ist dann aber zu beachten, daß die Anstellkraft für die Einrollscheiben 11 einseitig größer sein muß, damit das axiale Spiel des Innenrings 7 überall in der gleichen Richtung beseitigt wird.
Bei der Befestigung kann auch ein feststehendes und damit einfacheres Werkzeug verwendet werden, dessen wirksamen Zone dem Schnitt der Einrollscheibe 11 entspricht. Dabei treten aber relativ hohe Reibkräfte auf, die eine hohe Belastung der Lagerstelle mit sich bringen.

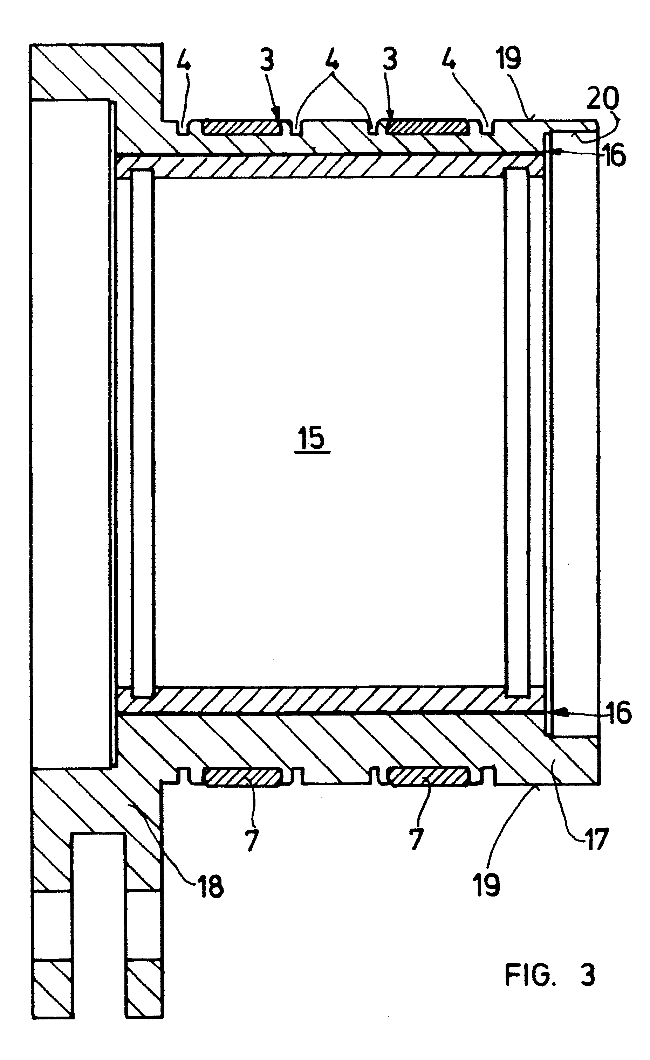

Eine spezielle Anwendung einer solchen Halterung wird in Figur 3 gezeigt. In Offsetdruckmaschinen werden Gummizylinder in exzentrisch gebohrten Büchsen gelagert, um den Achsabstand gegenüber einem benachbarten feststehend angeordneten Druckzylinder verändern zu können. Der Wellenzapfen des Gummizylinders wird in einem Gleitlager 15 gelagert. Das Gleitlager 15 ist in die Bohrung 16 einer Lagerbüchse 17 eingepreßt. Ein Fortsatz 18 dient dazu, die Lagerbüchse 17 zu schwenken. Dazu ist der äußere Umfang 19 der Lagerbüchse 17 exzentrisch gegenüber der Bohrung 16 bzw. dem Gleitlager 15 bearbeitet und mit Lagerstellen zur Aufnahme von zwei Zylinderrollen- oder Nadellagern versehen. Am äußeren Umfang 19 der Lagerbüchse 17 sind zur Halterung von zwei Innenringen 7 jeweils eine Laufringnut 3 und zwei Spreiznuten 4 angebracht. Die Laufflächen 8 der Innenringe 7 liegen nach der Montage etwa auf Höhe des äußeren Umfangs 19 der Lagerbüchse 17. Die Lagerbüchse 17 kann nun auf einfache Weise komplett mit den Innenringen 7 und dem Gleitlager 15 in ihren Sitz eingeschoben werden. Der besondere Vorteil der beschriebenen Lagerung wird an der Lagerbüchse 17 deutlich. Diese ist auf der zum Gummizylinder hin gerichteten Seite mit einem Führungsbund 20 versehen, der zentrisch zur Bohrung 16 liegt, aber einen größeren Durchmesser als diese aufweist. Durch die exzentrische Lage der Bohrung 16 bzw. des Führungsbundes 20 zum äußeren Umfang 19 der Lagerbüchse 17 wird die verbleibende Wandstärke des Führungsbundes 20 in Richtung der Exzentrizität dünner als die Stärke der Innenringe 7. Eine Montage der Innenringe 7 auf dem dargestellten Wellendurchmesser wäre auf konventionelle Art nicht möglich, da dann der Führungsbund 20 wegfallen müßte. Die äußerst kompakte Bauweise wird hier sehr gut deutlich.

**Patentansprüche**

1. Verfahren zur Befestigung von separaten Elementen mit Laufflächen (8) für Wälzlager in innerhalb einer Lagerbohrung oder auf einer Welle vorgesehenen Laufringnuten (3), wobei pro Lagerstelle je ein gehärteter Laufring (7) vorgesehen ist, der wenigstens an einer Stelle im wesentlichen in einer die Drehachse enthaltenden Ebene als Trennfläche aufgetrennt bzw. gezielt gesprengt ist, der in eine die jeweilige Lagerbohrung bzw. Welle umfassende Laufringnut (3) durch spreizen oder zusammendrücken eingefedert oder aus den Bruchstükken wieder zusammengesetzt und durch Umformung von Werkstoff des Lagerkörpers (1, 17) gegen die an ihren Stirnseiten zur Lauffläche (8) hin angefaßten Elemente am Lagerkörper (1, 17) selbst festgelegt wird,
**dadurch gekennzeichnet,**
(a) daß der den Laufring (7) tragende Lagerkörper (1, 17) beiderseits und parallel der Laufringnut (3) mit jeweils einer Spreiznut (4) versehen wird, derart, daß zwischen der Laufringnut (3) und den beiden Spreiznuten (4) je ein schmaler Steg (6) verbleibt, und
(b) daß die Umformung von Werkstoff des Lagerkörpers durch plastische Verformung der Stege (6) mittels eines konisch zulaufenden Werkzeuges (11) bewirkt wird, wobei die zum Steg (6) hin gewandte Seite als kegelige Umformfläche (14) und die andere Seite als ebene Stützfläche (13) ausgebildet ist, und wobei das Werkzeug (11) sich während der Umformung axial auf die der Laufringnut (3) abgewandten Seite der Spreiznut (4) abstützt.

2. Verwendung der nach dem Verfahren gemäß Anspruch 1 geschaffenen Lagereinrichtung zur verstellbaren Lagerung einer exzentrisch gebohrten Lagerbüchse (17), in der ein Gleitlager (15) für einen Gummizylinder einer Offsetdruckmaschine gehalten wird, wobei im äußeren Umfang (19) der Lagerbüchse (17) zwei Laufringnuten (3) und beiderseits jeder Laufringnut eine Spreiznut (4) vorgesehen sind, und die Laufringe als Innenringe (7) für Rollen- oder Nadellager ausgebildet sind.

## Claims

1. Process for fixing separate elements with running surfaces (8) for roller bearings in race ring grooves (3) provided within a bearing bore or provided on a shaft, wherein per bearing position in each case a hardened race ring (7) is provided which, at least in one position, in essentially in a plane containing the rotational axis, it is separated with a separation surface or intentionally sprung, which is embedded in a race ring groove (3) surrounding the respective bearing bore shaft by spreading or pushing together or also assembled together again from fractions and is itself fixed against elements on the bearing body (1, 17) touching the end faces of the running surface (8) by deformation of the material of the bearing body (1, 17),
characterised in that
(a) the bearing body (1, 17) carrying the race ring (7) is provided on both sides and parallel to the race ring groove (3) with, in each case, a spreading groove (4) in such a way that between the race ring groove (3) and both of the spreading grooves (4), a narrow bar (6) remains in each case and
(b) the deformation of the material of construction of the bearing body is effected by plastic deformation of the bars (6) by means of a conically running tool (11) wherein the side turned toward the bars (6) is constructed as a conical deforming surface (14) and the other side as a flat support surface (13) and wherein the tool (11) during the deformation supports itself axially on the side of the spreading groove (4) remote from the race ring groove (3).

2. Use of the bearing unit constructed in accordance with the process according to Claim 1 for the adjustable mounting of an eccentrically bored bearing bush (17) in which a sliding bearing (15) is mounted for a blanket cylinder of an offset printing press, wherein, in the outer periphery (19) of the bearing bush (17), there are provided two race ring grooves (3) and, on both sides of each race ring groove, a spreading groove (4), and the race rings are constructed as inner rings (7) for roller or needle bearings.

## Revendications

1. Procédé pour fixer des éléments séparés à surfaces de roulement (8) pour paliers à rouleaux dans des gorges (3) pour bagues de roulement, prévues sur un arbre ou à l'intérieur d'un alésage du palier, une bague de roulement durcie (7) étant prévue pour chaque palier, bague qui, au moins en un endroit généralement dans un plan contenant l'axe de rotation, en tant que surface de séparation, est fractionnée ou incisée de façon adéquate, et qui est comprimée par écartement ou compression dans une gorge (3) pour ladite bague, comprise dans l'alésage du palier ou l'arbre respectif, ou est recomposée à partir des morceaux, et qui, par déformation de la matière du corps de palier (1,17) contre les éléments chanfreinés sur leurs faces frontales vers la surface de roulement (8), est fixée sur le corps de palier (1,17),
caractérisé en ce que :
a) le corps de palier (1,17) portant la bague de roulement (7) est muni, des deux côtés et parallèlement à la gorge (3), de gorges d'écartement (4), de sorte que, entre la gorge (3) pour la bague de roulement et les deux gorges d'écartement (4), demeure, à chaque fois, une nervure étroite (6), et
b) la déformation de la matière du corps de palier est effectuée par déformation plastique des nervures (6) au moyen d'un outil conique (11), dont la face en regard de la nervure (6) est réalisée en tant que surface de déformation conique (14) et l'autre face en tant que surface d'appui plane (13), et l'outil (11) s'appuyant, pendant la déformation, axialement sur la face, opposée à la gorge (3), de la gorge d'écartement (4).

2. Utilisation du dispositif formant palier réalisé selon le procédé conforme à la revendication 1, pour monter, de façon réglable, un coussinet (17) excentriquement percé, dans lequel est maintenu un palier à glissement (15) pour un cylindre en caoutchouc d'une machine imprimante offset, deux gorges (3) pour bague de roulement et, des deux côtés de chaque gorge pour bague de roulement, une gorge d'écartement (4) étant prévues à la périphérie externe (19) du coussinet (17), et les bagues de roulement étant réalisées en tant que bagues internes (7) pour des paliers à rouleaux ou à aiguilles.

FIG. 1

EP 0 205 800 B1

FIG. 2

EP 0 205 800 B1

FIG. 3